(19) Europäisches Patentamt

European Patent Office

Office européen des brevets

(11) **EP 1 411 474 A2**

(12) **EUROPEAN PATENT APPLICATION**

(43) Date of publication:
21.04.2004 Bulletin 2004/17

(51) Int Cl.⁷: **G06T 7/20**

(21) Application number: **03022291.3**

(22) Date of filing: **02.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.10.2002 US 269357**

(71) Applicant: **EATON CORPORATION**
**Cleveland, Ohio 44114-2584 (US)**

(72) Inventors:
• **Farmer, Michael E.**
**Bloomfield Michigan 48104 (US)**

• **Chen, Xunchang**
**Ann Arbor Michigan 48104 (US)**
• **Wen, Li**
**Rochester Michigan 48307 (US)**
• **Zhou, Chuan**
**Ann Arbor Michigan 48108 (US)**

(74) Representative: **Rüger, Barthelt & Abel**
**Patentanwälte**
**Postfach 10 04 61**
**73704 Esslingen a.N. (DE)**

(54) **Motion-based segmentation for occupant tracking using a hausdorff distance heuristic**

(57) A segmentation system (16) is disclosed that allows a segmented image (31) of a vehicle occupant (18) to be identified within an overall image (the "ambient image") (38) of the area (21) that includes the image of the occupant (18). The segmented image (31) from a past sensor measurement within can help determine a region of interest (52) within the most recently captured ambient image (38). To further reduce processing time, the system (16) can be configured to assume that the bottom of segmented image (31) does not move. Differences between the various ambient images (38) captured by the sensor (22) can be used to identify movement by the occupant (18), and thus the boundary of the segmented image (31). A template image is then fitted to the boundary of the segmented image (31) for an entire range of predetermined angles. The validity of each fit within the range of angles can be evaluated. The template image can also be modified for future ambient images.

Fig. 4

## Description

## RELATED APPLICATIONS

This Continuation-In-Part application claims the benefit of the following U.S. utility applications: "A RULES-BASED OCCUPANT CLASSIFICATION SYSTEM FOR AIRBAG DEPLOYMENT," Serial Number 09/870,151, filed on May 30, 2001; "IMAGE PROCESSING SYSTEM FOR DYNAMIC SUPPRESSION OF AIRBAGS USING MULTIPLE MODEL LIKELIHOODS TO INFER THREE DIMENSIONAL INFORMATION," Serial Number 09/901,805, filed on July 10, 2001; "IMAGE PROCESSING SYSTEM FOR ESTIMATING THE ENERGY TRANSFER OF AN OCCUPANT INTO AN AIRBAG," Serial Number 10/006,564, filed on November 5, 2001; "IMAGE SEGMENTATION SYSTEM AND METHOD," Serial Number 10/023,787, filed on December 17, 2001; and "IMAGE PROCESSING SYSTEM FOR DETERMINING WHEN AN AIRBAG SHOULD BE DEPLOYED," Serial Number 10/052,152, filed on January 17, 2002, the contents of which are hereby by incorporated by reference in their entirety.

## BACKGROUND OF THE INVENTION

The present invention relates in general to systems and techniques used to isolate a "segmented image" of a moving person or object, from an "ambient image" of the area surrounding and including the person or object in motion. In particular, the present invention relates to isolating a segmented image of an occupant from the ambient image of the area surrounding and including the occupant, so that the appropriate airbag deployment decision can be made.

There are many situations in which it may be desirable to isolate the segmented image of a "target" person or object from an ambient image which includes the image surrounding the "target" person or object. Airbag deployment systems are one prominent e xample of such a situation. Airbag deployment systems can make various deployment decisions that relate in one way or another to the characteristics of an occupant that can be obtained from the segmented image of the occupant. The type of occupant, the proximity of an occupant to the airbag, the velocity and acceleration of an occupant, the mass of the occupant, the amount of energy an airbag needs to absorb as a result of an impact between the airbag and the occupant, and other occupant characteristics can be incorporated into airbag deployment decision-making.

There are significant obstacles in the existing art with regards to image segmentation techniques. Prior art image segmentation techniques tend to be inadequate in high-speed target environments, such as when identifying the segmented image of an occupant in a vehicle that is braking or crashing. Prior art image segmentation techniques do not use the motion of the occupant to assist in the identification of the boundary between the occupant and the area surrounding the environment. Instead of using the motion of the occupant to assist with image segmentation, prior art systems typically apply techniques best suited for low-motion or even static environments, "fighting" the motion of the occupant instead of utilizing characteristics relating to the motion to assist in the segmentation process.

Related to the challenge of motion is the challenge of timeliness. A standard video camera typically captures about 40 frames of images each second. Many airbag deployment embodiments incorporate sensors that capture sensor readings at an even faster than a standard video camera. Airbag deployment systems require reliable real-time information for deployment decisions. The rapid capture of images or other sensor data does not assist the airbag deployment system if the segmented image of the occupant cannot be identified before the next frame or sensor measurement is captured. An airbag deployment system can only be as fast as its slowest requisite process step. However, an image segmentation technique that uses the motion of the occupant to assist in the segmentation process can perform its job more rapidly than a technique that fails to utilize motion as a distinguishing factor between an occupant and the area surrounding the occupant.

Prior art systems typically fail to incorporate contextual "intelligence" about a particular situation into the segmentation process, and thus such systems do not focus on any particular area of the ambient image. A segmentation process specifically designed for airbag deployment processing can incorporate contextual "intelligence" that cannot be applied by a general purpose image segmentation process. For example, it would be desirable for a system to focus on an area of interest within the ambient image using recent past segmented image information, including past predictions that incorporate subsequent anticipated motion. Given the rapid capture of sensor measurements, there is a limit to the potential movement of the occupant between sensor measurements. Such a limit is context specific, and is closely related to factors such as the time period between sensor measurements.

Prior art segmentation techniques also fail to incorporate useful assumptions about occupant movement in a vehicle. It would be desirable for a segmentation process in a vehicle to take into consideration the fact that occupants tend to rotate about their hips, with minimal motion in the seat region. Such "intelligence" can allow a system to focus on the most important a reas of the ambient image, saving valuable processing time.

Further aggravating processing time demands in existing segmentations systems is the failure of those systems to incorporate past data into present determinations. It would be desirable to track and predict occupant characteristics using techniques such as Kalman filters. It would also be desirable to apply a template to an ambient image that can adjusted with each sensor measurement. The use of a reusable and modifiable template can be a useful way to incorporate past data into present determinations, alleviating the need to recreate the segmented image from scratch.

## SUMMARY OF THE INVENTION

This invention is an image segmentation system or method that can be used to generate a "segmented image" of an occupant or other "target" of interest from an "ambient image," which includes the "target" and the environment in the vehicle that surrounds the "target." The system can identify a "rough" boundary of the segmented image by comparing the most recent ambient image ("current ambient image") to a previous ambient image ("prior ambient image"). An adjustable "template" of the segmented image derived from prior ambient images can then be applied to the identified boundary, further refining the boundary.

In a preferred embodiment of the invention, only a portion of the ambient image is subject to processing. An "area of interest" can be identified within the current ambient image by using information relating to prior segmented images. In a preferred embodiment, it is assumed that the occupant of the vehicle remains seated, eliminating the need to process the area of the ambient image that is close to the seat. The base of the segmented image can thus be fixed, allowing the system to ignore that portion of the ambient image. Many embodiments of the system will apply some sort of image thresholding heuristic to determine if a particular ambient image is reliable for use. Too much motion may render an ambient image unreliable. Too little motion may render an ambient image unnecessary.

A wide range of different techniques can be used to fit and modify the template. In some embodiments, the template is rotated through a series of predefined angles in a range of angles. At each angle, the particular "fit" can be evaluated using a wide range of various heuristics.

Various aspects of this invention will become apparent to those skilled in the art from the following detailed description of the preferred embodiment, when read in light of the accompanying drawings.

## BRIEF DESCRIPTION OF THE DRAWINGS

Fig. 1 is a partial view illustrating an example of a surrounding environment for an image segmentation system.

Fig. 2 shows a high-level process flow illustrating an example of an image segmentation system capturing a segmented image from an ambient image, and providing the segmented image to an airbag deployment system.

Fig. 3 is a flow chart illustrating one example of an image segmentation process being incorporated into an airbag deployment process.

Fig. 4 is a flow chart illustrating one example of an image segmentation process.

Fig. 5 is an example of a histogram of pixel characteristics that can be used in by an image segmentation system.

Fig. 6 is an example of a graph of a cumulative distribution function that can be used by an image segmentation system.

Fig. 7 is a block diagram illustrating one example of image thresholding heuristic that can be incorporated into an image segmentation system.

Fig. 8a is a diagram illustrating one example of a segmented image that can be subjected to template processing.

Fig 8b is a diagram illustrating one example of template processing.

Fig. 8c is a diagram illustrating a segmented image being subject to template processing.

Fig. 8d is a diagram illustrating one example of an ellipse than can be fitted to the segmented image.

Fig. 8e is a diagram illustrating one example of an ellipse that has been fitted to a segmented image after template processing.

Fig. 8f is a diagram illustrating one example of a new silhouette being generated for future template processing.

Fig. 9 is a diagram illustrating one example of an upper ellipse representing an occupant, and some examples of potentially important characteristics of the upper ellipse.

Fig. 10 is a diagram illustrating examples an upper ellipse in a state of leaning left, leaning right, and being centered.

Fig. 11 is a Markov chain diagram illustrating three states/modes of leaning left, leaning right, and being centered, and the various probabilities associated with transitioning between the various states/modes.

Fig. 12 is a Markov chain diagram illustrating three states/modes of human, stationary, and crashing, and the various probabilities associated with transitioning between the various states/modes.

Fig. 13 is a flow chart illustrating one example of the processing that can be performed by a shape tracker and predictor.

Fig. 14 is a flow chart illustrating one example of the processing that can be performed by a motion tracker and predictor.

## DETAILED DESCRIPTION OF A PREFERRED EMBODIMENT

The invention is an image segmentation system which can capture a "segmented image" of the occupant or other "target" object (collectively the "occupant") from an "ambient image" that includes the target and the area surrounding the target.

## I. PARTIAL VIEW OF SURROUNDING ENVIRONMENT

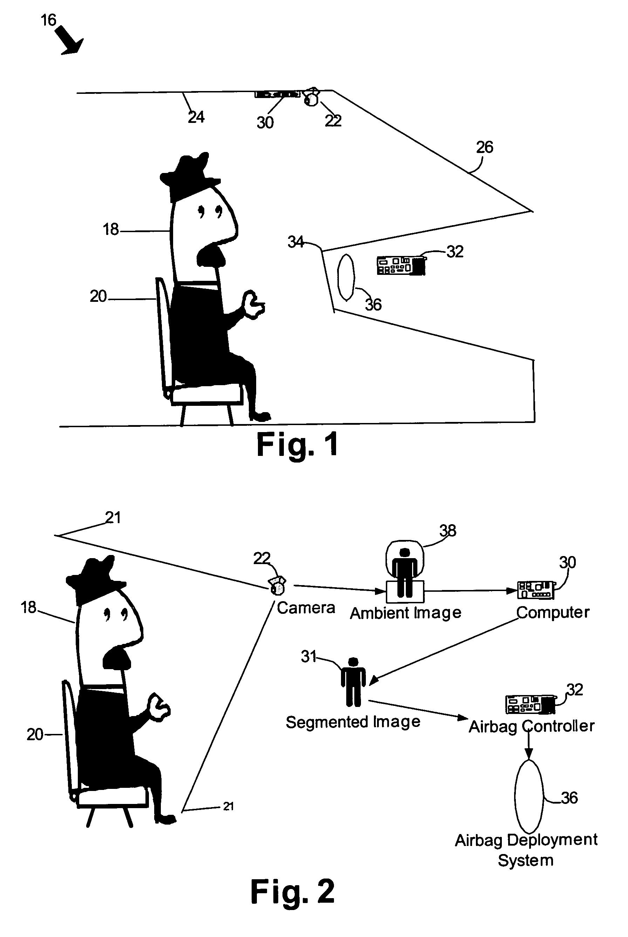

Referring now to the drawings, illustrated in Fig. 1 is a p artial view of the surrounding environment for potentially many different embodiments of an image segmentation system 16. If an occupant 18 is present, the occupant 18 can sit on a seat 20. In some embodiments, a video camera or any other sensor capable of rapidly capturing images (collectively "camera" 22) can be attached in a roof liner 24, above the occupant 18 and closer to a front windshield 26 than the occupant 18. The camera 22 can be placed in a slightly downward angle towards the occupant 18 in order to capture changes in the angle of the occupant's 18 upper torso resulting from forward or backward movement in the seat 20. There are many potential locations for a camera 22 that are well known in the art. Moreover, a wide range of different cameras 22 can be used by the system 16, including a s tandard video camera t hat typically captures approximately 40 images per second. Higher and lower speed cameras 22 can be used by the system 16.

In some embodiments, the camera 22 can incorporate or include an infrared or other light sources operating on direct current to provide constant illumination in dark settings. The system 16 can be designed for use in dark conditions such as night time, fog, heavy rain, significant clouds, solar eclipses, and any other environment darker than typical daylight conditions. The system 16 can be used in brighter light conditions as well. Use of infrared lighting can hide the use of the light source from the occupant 18. Alternative embodiments may utilize one or more of the following: light sources separate from the camera; light sources emitting light other than infrared light; and light emitted only in a periodic manner utilizing alternating current. The system 16 can incorporate a wide range of other lighting and camera 22 configurations. Moreover, different heuristics and threshold values can be applied by the system 16 depending on the lighting conditions. The system 16 can thus apply "intelligence" relating to the current environment of the occupant 18.

A computer, computer network, or any other computational device or configuration capable of implementing a heuristic or running a computer program (collectively "computer system" 30) houses the image segmentation logic. The computer system 30 can be any type of computer or device capable of performing the segmentation process described below. The computer system 30 can be located virtually anywhere in or on a vehicle. Preferably, the computer system 30 is located near the camera 22 to avoid sending camera images through long wires. An airbag controller 32 is shown in an instrument panel 34. However, the system 16 could still function even if the airbag controller 32 were located in a different environment. Similarly, an airbag deployment system 36 is preferably located in the instrument panel 34 in front of the occupant 18 and the seat 20, although alternative locations can be used by the system 16. In some embodiments, the airbag controller 32 is the same device as the computer system 30. The system 16 can be flexibly implemented to incorporate future changes in the design of vehicles and airbag deployment systems 36.

## II. HIGH LEVEL PROCESS FLOW FOR AIRBAG DEPLOYMENT

Fig. 2 discloses a high level process flow diagram illustrating one example of the image segmentation system 16 in the context of airbag deployment processing. An ambient image 38 of a seat area 21 that includes both the occupant 18 and surrounding seat area 21 can be captured by the camera 22. In the figure, the seat area 21 includes the entire occupant 18, although under many different circumstances and embodiments, only a portion of the occupant's 18 image will be captured, particularly if the camera 22 is positioned in a location where the lower extremities may not be viewable.

The ambient image 38 can be sent to the computer 30. The computer 30 can isolate a segmented image 31 of the occupant 18 from the ambient image 38. The process by which the computer 30 performs image segmentation is described below. The segmented image 31 can then be analyzed to determine the appropriate airbag deployment decision. This process is also described below. For example, the segmented image 31 can be used to determine if the occupant 18 will be too close to the deploying airbag 36 at the time of deployment. The analysis and characteristics of the segmented image 31 can be sent to the airbag controller 32, allowing the airbag deployment system 36 to make the appropriate deployment decision with the information obtained relating to the occupant 18.

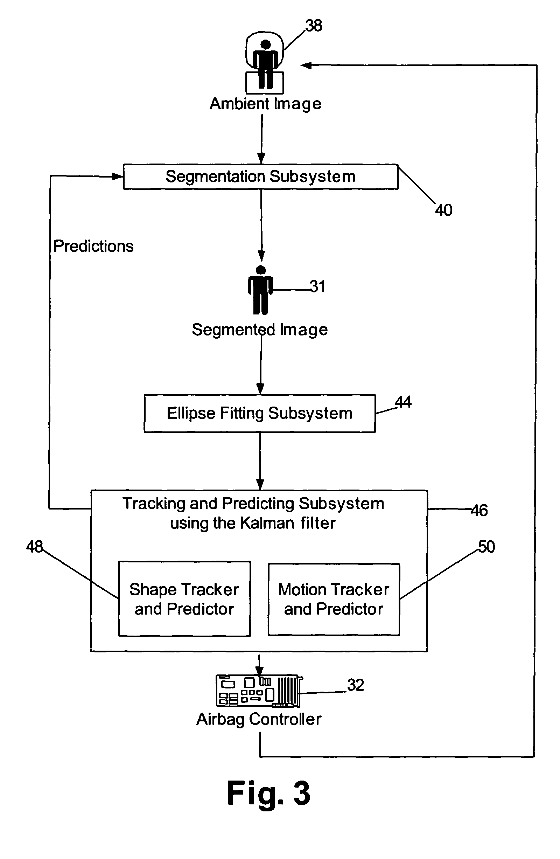

Fig. 3 discloses a more detailed example of the process from the point of capturing the ambient image 38 through sending the appropriate occupant data to the airbag controller 32. This process continuously repeats itself so long as the occupant is in the vehicle. In a preferred embodiment, past data is incorporated into the analysis of current data, and thus a process flow arrow leads from the airbag controller 32 at the bottom of the figure back to the top of the figure.

New ambient images 38 are repeatedly captured by the camera 22 or other sensor. The most recently captured ambient image 38 can be referred to as a current ambient image. Older ambient images 38 can be referred to as prior ambient images 38 or past ambient images. After an ambient image 38 is captured by the camera 22, it can then be subjected to the processing of an image segmentation subsystem ("image segmentation process") 40. The process of image segmentation is described in greater detail below. As disclosed in the figure, the segmentation process can incorporate past data relating to occupant 18 characteristics that are either passed along from the airbag controller 32 or stored in the computer system 30. However, the image segmentation process 40 does not require such information as an input in order to function. In a preferred embodiment, past occupant characteristics and data are accessible by the image segmentation process 40 in order to allow the system 16 to focus on an area of interest within the ambient image 38 and/or to otherwise incorporate intelligence and situational context to the segmentation process 40.

The segmented image 31 is generated as a result of the image segmentation process 40. In different embodiments, the segmented image 31 can potentially take the form of a wide range of different images and image characteristics. However, many occupant characteristics in the universe of potential occupant characteristics are not incorporated into airbag deployment decisions. Key characteristics for deployment purposes typically relate to position and motion characteristics. Thus, there is no reason to subject the entire segmented image 31 to subsequent processing. In a preferred embodiment, an ellipse fitting s ubsystem 44 is used to fit an ellipse around the segmented image 31 so that the system 16 can then perform subsequent processing on an ellipse, an object without the extraneous characteristics of the segmented image 31. In alternative embodiments, other geometric shapes or configurations of points can be used as a proxy by the system 16 to represent the occupant 18.

A tracking subsystem 46 can be used to track occupant characteristics such as position, velocity, acceleration, and other characteristics. In some embodiments, the tracking subsystem 46 can also be used to "extrapolate forward" occupant characteristics, generating predictions of what those characteristics would be in the interim of time between sensor measurements. In a preferred embodiment, the tracking and predicting subsystem 46 uses one or more Kalman filters to integrate past sensor measurements with the most recent sensor measurement in a probability-weighted manner. Kalman filters are described below.

The tracking subsystem 46 can incorporate a wide variety of different subsystems that focus on different subsets of occupant characteristics. For example, the tracking subsystem 46 can include a shape tracker and predictor module 48 for tracking and predicting "shape" characteristics and a motion tracker and predictor module 50 for tracking and predicting "motion" characteristics. The processes that can be performed by these modules are described in greater detail below.

The information by the tracking subsystem 40 can then be sent to the airbag controller 32 to effectuate the appropriate behavior by the airbag deployment subsystem 36. In some circumstances, deployment is impeded due to the presence or future presence of the occupant in an at-risk-zone. In some embodiments, airbag deployments can be configured to occur at various strengths, corresponding to the amount of kinetic energy the airbag needs to absorb from the occupant 18. The tracking subsystem 40 can also be used to determine whether or not a collision has occurred, and whether such a collision merits the deployment of an airbag.

**III. IMAGE SEGMENTATION HEURISTIC**

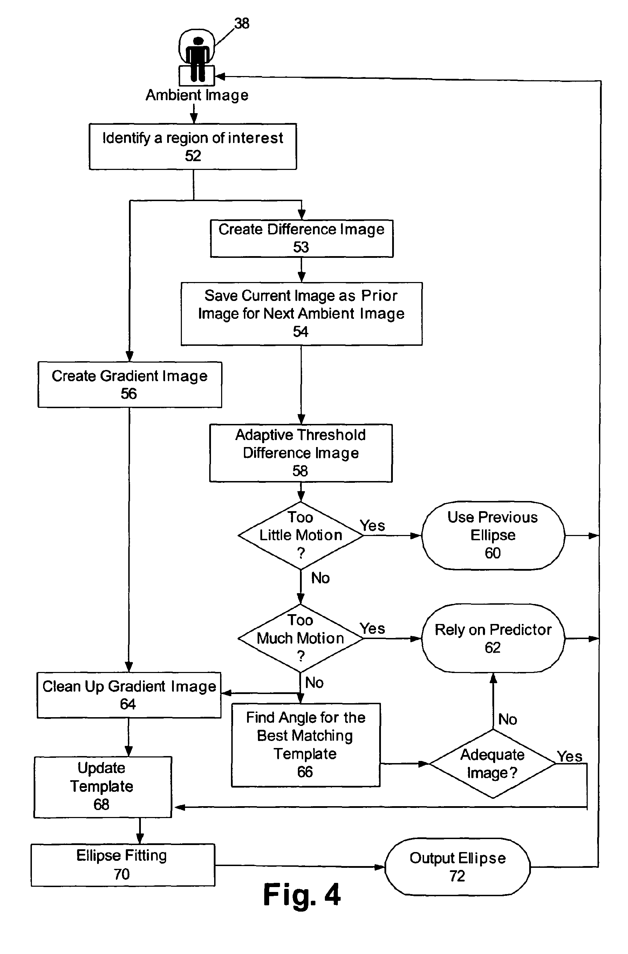

Fig. 4 discloses a flowchart illustrating an example of an image segmentation heuristic that can be implemented by the system 16. The system 16 is flexible, and can incorporate a wide variety of different variations to the processes disclosed in the figure. Some embodiments may apply fewer process steps while others will add process steps. In a preferred embodiment, each ambient image 38 captured by the camera 22 can be subject to a segmentation process such as the process illustrated in the figure.

**A. "Region of Interest" and the Region of Interest Module**

A region of interest within the ambient image 38 is determined at 52. This process need not be invoked in all embodiments of the system 16. However, it is preferable to focus attention on certain areas of the ambient image 38 in light of time and resource constraints that are common with respect to airbag deployment determinations and other applications of the system 16. The region of interest determination is performed by a region of interest m odule w ithin t he s egmentation subsystem 40. In a preferred embodiment, the occupant's most recent prior position (e.g. the most position of the prior segmented image 31 within the prior ambient image 38 or the most recent prediction of the position of the segmented i mage 31 within the prior ambient image 38) is used to determine the most likely location of the most recent ("current") segmented image 31 within the current ambient image 38. If the tracking subsystem 46 includes the ability to make future predictions, the future prediction can provide the information necessary to invoke the region of interest module. Both position and motion data can be preferably incorporated into a region of interest analysis. Occupant characteristics such as occupant type (e.g. adult, child, child seat, etc.) and potentially any other relevant occupant characteristic can also be incorporated into this analysis.

In a preferred embodiment, the tracking subsystem 46 takes the position and shape of the last computed segmented image 31 (typically represented by an ellipse), and projects it ahead to the current image frame given the state transition matrix. This process is discussed below. Current ellipse parameters can be multiplied by the state transition matrix, generating an output of new values predicted at the "current" period of time.

In a preferred embodiment, the region of interest is defined as a rectangle oriented along the major axis of the ellipse generated by the ellipse fitting subsystem 44. In alternative embodiments, different shapes or series of shapes can be used by the system 16. In a preferred embodiment, the height of the rectangle is preferably a predefined number of pixels above the top of the ellipse and the lower edge of the rectangle is defined to be "N" pixels below the midpoint or centroid of the ellipse. This is to ignore pixels near the bottom of the image since they tend to have minimal motion since the occupant 18 tends to rotate about the occupant's hips which are typically fixed in the seat. This assumption is particularly true when the occupant 18 is utilizing a seat belt, but the assumption can still be useful in situations where a seat belt is not used. Alternative embodiments can incorporate a region of interest that is different, larger, or smaller than the region of interest described above. By focusing on a relatively small region of interest, processing time is reduced. Moreover, the extraneous effects of motion such as hands waiving and objects driving by windows of the vehicle can be properly ignored. In a preferred embodiment, only the region (e.g. "area") of interest is passed along for further processing and references to the "ambient image" can be understood to mean the area of interest within the ambient image. In alternative embodiments, subsequent processing is not limited to the area of interest. After the region of interest is determined at 52, system 16 processing can be performed in two parallel, distinct, and simultaneous threads. In alternative embodiments, these threads can be combined into a single sequential thread, with no two processes being performed in a simultaneous manner.

### B. "Difference Image" and the Image Difference Module

An image difference module 53 can be used to perform an image difference heuristic on the region of interest described above. The image difference module 53 generates a "difference" image, an image representing the differences between the current (e.g., most recently captured) ambient image 38 and a prior ambient image 38. The image difference heuristic determines the differences in pixel values between the recent ambient image 38 and the current image 38. The absolute value of the difference can be used by the system 16 to identify which pixels have different values in the current ambient image 38, and accordingly, which pixels represent the boundaries of objects or occupants in the image that are moving. Stationary objects such as most of the interior of the vehicle will be erased since they do not change from image to image, resulting in a *de minimus* absolute value. The image difference module effectively generates a difference image that shows the edge boundary of any object (e.g., the occupant 18) that is moving since it is the edges of the objects where the most perceived motion will be.

### C. Low Pass Module

In a preferred embodiment, a low pass filter is applied to the difference image. The low-pass filter serves to reduce high frequency noise and also serves to blur the difference image slightly, which spreads the width of the edges found in the difference image. This can be important for subsequent use as a mask in subsequent processing, as discussed below. In the figure, the low pass module and its functionality can be incorporated into the image difference module 53.

### D. Saving Ambient Images for Future "Difference" Images

The current ambient image 38 is saved at 54 so that it can serve as the prior ambient image 38 for the next ambient image 38 processed by the system 16. In alternative embodiments, weighted combinations of prior ambient images 38 can be created and stored for the purposes of generating difference images.

### E. Create Gradient Image Module

In a preferred embodiment, a create gradient image module 56 uses the area of interest identified by the region of interest module 52 to create a gradient image of that area of interest by performing a create gradient image heuristic. The image gradient heuristic finds areas of the target image that are regions of rapidly changing image amplitude, e.g., portions of the segmented image that are moving. A preferred method is to compute the X and Y directional gradients (derivatives) in the current ambient image 38, or preferably, just the area of interest in the current ambient image 38.

The calculation for the Y-direction can be Image (i,j) - Image (i,j-N), where "i" represents the X-coordinate for the pixel and "j" represents the Y-coordinate for the pixel. "N" represents the change in image amplitude. The calculation for the X-direction can be Image (i,j) - Image (i-N, j). Boundaries identified in the gradient image can be used for subsequent processing such as template updating.

$$\text{Equation 1: Gradient Image (Y-Direction)} = \text{Image (i,j)} - \text{Image (i,j-N)}$$

$$\text{Equation 2: Gradient Image (X-Direction)} = \text{Image (i,j)} - \text{Image (i-N, j)}$$

### F. Image Difference Threshold Module

An image difference threshold module (or simply "Image Threshold Module") 58 can be used to perform a threshold heuristic on the "difference image" created at 53. The threshold heuristic at 58 is used to determine whether the current ambient image 38, or preferably a region of interest in the current ambient image 38, should be subjected to subsequent processing by the system 16. The threshold heuristic at 58 can also subsequently be used as a "mask" for the gradient image in order to remove constant edges, such as door trim edges and other non-moving interior elements.

### 1. "Thresholding" the Image

Generating a threshold difference image can involve comparing the extent of luminosity differences in the "difference" image to a threshold that is either predetermined, or preferably generated from luminosity data from the ambient image 38 being processed. To "threshold" the "difference" image using characteristics of the ambient image 38 itself, a histogram of pixel luminosity values should first be created.

### a. Histogram

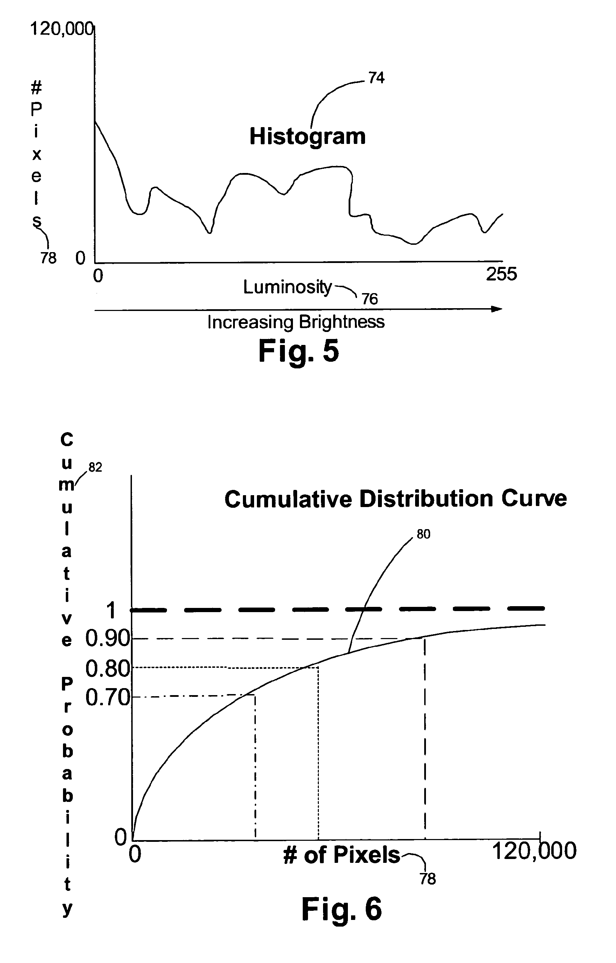

In a preferred embodiment, the threshold is computed by creating a histogram of the "difference" values. Fig. 5 is an example of such a histogram 74.

Any ambient image 38 captured by the camera 22 can be divided into one or more pixels 78. As a general matter, the greater the number of pixels 78 in the ambient image 38, the better the resolution of the image 38. In a preferred embodiment, the width of the ambient image 38 should be at least approximately 400 pixels across and the ambient image 38 should be at least approximately 300 pixels in height. If there are too few pixels 78, it can be difficult to isolate the segmented image 31 from the ambient image 38. However, the number of pixels 78 is dependent upon the type and model of camera 22, and cameras 22 generally become more expensive as the number of pixels 78 increases. A standard video camera can capture an image roughly 400 pixels across and 300 pixels in height. Such an embodiment captures a sufficiently detailed ambient image 38 while remaining relatively inexpensive because a standard non-customized camera 22 can be used. Thus, a preferred embodiment will use approximately 120,000 (400 X 300) total pixels 78, although the area of interest will typically include far fewer pixels 78.

Each pixel 78 can possess one or more different pixel characteristics or attributes (collectively "characteristics") 76 used by the system 16 to isolate the segmented image 31 from the ambient image 38. Pixels 78 can have one or more pixel characteristics 76, with each characteristic represented by one or more pixel values. One example of a pixel characteristic 76 is a luminosity measurement ("luminosity"). In a preferred embodiment, pixel characteristics 76 in the "difference" image represent the difference in luminosity values between the current ambient image 38 and the prior ambient image 38. The pixel characteristic 76 of luminosity can be measured, stored, and manipulated as a pixel value 76 relating to the particular pixel. In a preferred embodiment, luminosity can be represented in a numerical pixel value between 0 (darkest possible luminosity) and 255 (brightest possible luminosity). Alternative p ixel c haracteristics c an include c olor, h eat, a weighted combination of two or more characteristics, or any other characteristic that could potentially be used to distinguish the segmented image 31 from the ambient image 38. Alternative embodiments can use alternative characteristics to distinguish pixels, building histograms of those characteristics.

The histogram 74 in the figure records the number of pixels 78 with a particular individual or combination of pixel characteristics 76 (collectively "characteristic"). The histogram 74 records the aggregate number of pixels 78 that possess a p articular p ixel value for that characteristic Thus, the Y-value at the far right side of the graph indicates the number of pixels 78 with a luminosity of 255 (the greatest possible difference in luminosity value) and the Y-Value at the far left side of the graph indicates the number of pixels with a luminosity value of 0 (no difference in luminosity value).

**b. Cumulative Distribution Function**

The histogram of Fig. 5 can be used to generate a cumulative distribution function as is illustrated in Fig. 6. A cumulative distribution curve 80 is a means by which the system 16 can incorporate a "confidence factor" indicator to the determination of whether a change in pixel luminosity (or other characteristic) truly indicates a boundary between the segmented image 31 and the ambient image 38.

The cumulative distribution curve 80 supports the ability to select a top N% of pixels 78 with respect to changes in pixel value. The vertical axis can represent a cumulative probability 82 that the system 16 has not mistakenly classified any pixels 78 as representing boundary pixels 78. The cumulative probability 82 can be the value of 1 - N, where N is the value used to select a top N% of motion pixels 78. For example, selecting the top 10% of pixels will result in a probability of 0.9, with 0.9 representing the probability that an ambient pixel has not been mistakenly identified as a segmented pixel. Absolute certainty (a probability of 1.0) can only be achieved by assuming all 120,000 pixels are ambient pixels 78, e.g. that no pixel 78 represents the segmented image 31 of the occupant 18. Such certainty is not helpful to the system 16, because it does not provide a starting point at which to build out the shape of the occupant 18. Conversely, a low standard of accuracy such as a value of 0 or a value close to 0, does not exclude enough pixels 78 from the category of boundary pixels 78. In a preferred embodiment, a 0.85 probability is desired, so the top 15% of pixels 78 are sought out. In alternative embodiments, a range of probability values from 0 to 1.0 can be used. In some alternative embodiments, different lighting conditions may make it beneficial to group different pixels 78 by image areas. Different image areas could have different "N" values.

In a multi-image threshold environment, probabilities such as 0.90, 0.80. or 0.70 are preferable because they generally indicate a high probability of accuracy while at the same time providing a substantial base of pixels 78. In a preferred embodiment, multi-image threshold systems 16 will have as many cumulative distribution functions 80 as there are image thresholds.

The system 16 can incorporate the use of multiple difference images and multiple image thresholds which can be combined in many different ways. For example, threshold probabilities of 0.90, 0.70, and 0.50 can be used to create three thresholded difference images which can then be combined using a wide variety of different heuristics.

**c. "Thresholding" the Difference Image**

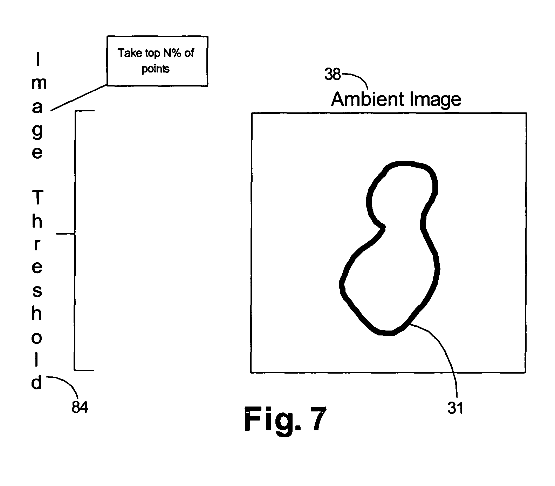

Fig. 7 is a block diagram illustrating an example of a single image threshold embodiment. An image threshold 84 allows the system 16 to select the top "N"% of boundary pixels by comparing the pixel value of a particular pixel with a threshold value determined by the desired cumulative probability 82 in Fig. 6. In a preferred embodiment, the thresholding of the difference image results in a binary image. Pixels with pixel values greater than or equal to the threshold value are set to a value of 1. All other pixel values are set to 0. In a preferred embodiment, this process results in a binary image where each pixel has a value of either 1 or 0.

**2. Is the "Difference Image" worth subsequent processing?**

Returning to Fig. 4, the thresholded difference image is used to determine whether or not the difference image, and the ambient image 38 from which the difference image was derived, is worth subsequent processing and reliance by the system 16. If there is too much motion in the difference image, it will be insufficiently reliable to justify use in the form of subsequent processing. Too much motion can occur in random situations such as when an occupant 18 pulls a sweater over his or her head while seated. Such a situation will generate a lot of "motion" but the system 16 will not be able to end up with an ellipse to send to the airbag controller 32. If there is too much motion, the system 16 at 62 should either rely on the most recent prediction generated by the tracking and predicting subsystem 46 with respect to current characteristics of the occupant 18, or preferably extrapolate forward the most recent prediction as described below.

If there is too little motion, nothing material has changed from the last ambient image 38, and thus system 16 at 60 can rely on the previous ellipse generated by the previous process loop. Resolving the question of too little motion and/or too much motion can greatly improve the accuracy of the system 16. The determination of whether or not there has been too much or too little motion can be implemented in the system 16 by comparing the image threshold to a predefined image threshold value representing too much motion, or too little motion.

**G. Clean Gradient Image Module**

A clean gradient image module (or simply clean image module) 64 can be used to "clean" the gradient image derived by the create gradient image module 56. The gradient image (preferably limited to the initial region of interest) passed along by the create gradient image module 56 typically includes edges that are from the vehicle interior such as edges from the door trim, etc. These edges are not relevant since they are not part of the occupant 18. The thresholded difference image can be used as a "mask" to remove the unwanted constant elements in the image and keep only the pixels that were an edge in the segmented image 31 and had motion in and around them. This can assist the system 16 in distinguishing motion pixels from background pixels, increasing the accuracy of subsequent heuristics such as the template matching and template updating processes described below.

### H. Template Matching Module

A template matching module 66 can be invoked by the system 16. The template matching module 66 performs a template fitting or template matching heuristic. As described below, in a preferred embodiment, the template image is a prior segmented image 31. In alternative embodiments, the template image can be predefined, but is preferably subject to adjustment as described below. A wide variety of different template matching heuristics can be implemented by the template matching module 66. One such heuristic is a Hausdorf Distance heuristic. An example of a Hausdorf Distance calculation is provided in **Equation 3:**

$$h(M,I) = \max \min \| m\text{-}i \|$$

The variable "m" is a point in the template image and the variable "I" is a point in the difference image. The distance can be the distance (in pixels) to the nearest non-zero pixel from one image to the other image. Different variations of the Hausdorf Distance heuristic can be used by the system 16.

The template image can be rotated through a range of angles that the occupant 18 may have been able to rotate through in the time between sensor measurements. This is typically plus or minus 6 degrees, which is a worst case value for the time between video camera frames if the vehicle was in a high speed brake condition and the occupant 18 was rotating about the hip harness portion of the seat belt.

For each rotated angle, the Hausdorf Distance heuristic can be invoked to calculate the "distance" between the difference image and the rotated template image. The template image and the difference image are preferably both binary images. The template location with the lowest Hausdorf Distance is the template angle of rotation that corresponds to the best alignment with the difference image.

If the minimum Hausdorf Distance is not clearly distinct, something may be wrong with the initial captured ambient image 38. For example, the occupant 18 may be temporarily blocking the camera 22 with their hand. If the difference between the lowest Hausdorf Distance and the second lowest Hausdorf Distance is too small when compared to a predetermined threshold incorporated into the system 16, then the system 16 should ignore the current ambient image 38 and should instead extrapolate a future prediction of the segmented image 31 using the tracking and prediction subsystem 46.

### I. Update Template Module

If the matched template indicates that an adequate segmented image 31 can be generated, the system 16 can invoke a update template module 68 for enhancing the template image for future use by the system 16. The template image was initially generated by taking equally angularly spaced samples of a template silhouette. The set of points can then be searched in the new gradient image. The template is rotated to find the best match for the angle in the new gradient image. For each of the control points, a line perpendicular to the tangent point of the silhouette is generated. The update template heuristic increments the position along the perpendicular line and finds the best match for the line segment in the gradient image. In some embodiments, this set of new locations can be stored in the computer 30 as a sequence of data points, for future use as a template image. In other embodiments, a cubic spline fit is then generate from the sequence of data points and a new set of control points along the silhouette are generated at the equally spaced angles around the template. The spline line serves as the new silhouette.

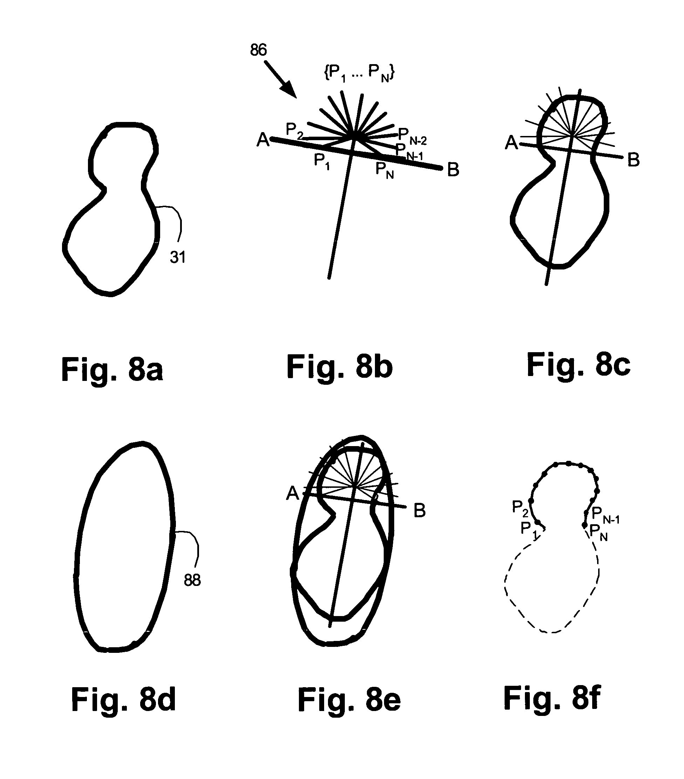

Fig. 8a is an illustration of one example of a template image 31, a prior segmented image 31. Fig. 8b is an illustration of one example of a range of angles 86 in which the template image can be rotated. Fig. 8c is an illustration of the range of angles being applied to an image. Fig. 8d is an example of an ellipse 88 that can be generated by the system 16. Fig. 8e is an example of an ellipse being fitting over an updated template of the occupant 18. Fig. 8f is an example of a new silhouette being generated, for future use as an image template.

### J. Ellipse Fitting Module

Once the best fit template is determined and modified, the system 16 can extract the corresponding ellipse parameters so that those parameters can be provided to the tracking and predicting subsystem 46.

An ellipse fitting module 70 can be used to fit an ellipse 88 to the resulting matched and updated template. This functionality can also be performed separate from the image segmentation subsystem 40 in the ellipse fitting subsystem 44. In either case, the system 16 can incorporate a wide variety of different ellipse fitting heuristics. One example of an ellipse fitting heuristic is a "direct least squares heuristic."

The direct least squares heuristic treats each non-zero pixel on the template as an (x,y) sample value which can be used for a least squares fit. In a preferred embodiment, it is assumed that the lower portion of the ellipse does not move. Thus, it is preferably not part of the region of interest identified above. By using the lower portion of the last ellipse, the system 16 can ensure that the ellipse remains oriented correctly with the lower-most portion of the ellipse on the seat. If the assumption about occupant movement is not accurate, the resulting vertical motion would generate too much motion, and the system 16 would throw out the image and rely on a forward extrapolation of the last prediction at 62, as discussed above. In order to complete the ellipse taking into consideration the fact the lower portion was not part of the region of interest, the lower portion of the last ellipse can be used, facilitating the correct orientation of the ellipse with the lower-most portion of the ellipse on the seat. The system 16 can apply a number of different sample ellipses at the base of the initial ellipse upon the initial turning on of the system 16.

## IV. ELLIPSES AND OCCUPANT CHARACTERISTICS

In airbag deployment embodiments of the system 16, the system 16 preferably uses ellipses 88 to represent the occupant in order to monitor relevant occupant characteristics. In alternative embodiments, alternative shapes can be used to represent the segmented image 31 of the occupant 18. In a preferred embodiment, the ellipse fitting subsystem is software in the computer 30, but in alternative embodiments, the ellipse fitting subsystem can be housed in a different computer or device.

In a preferred embodiment, the ellipse 88 used for occupant characteristic tracking and predicting can extend from the hips up to the head of the occupant 18.

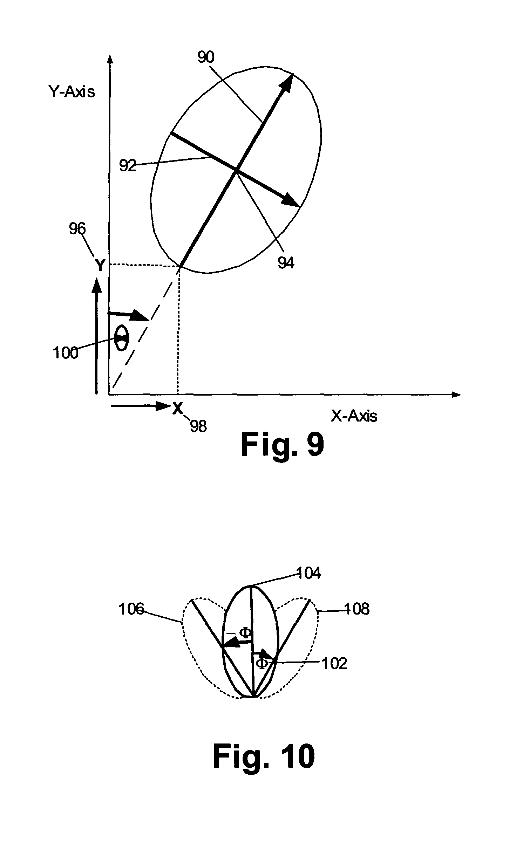

Fig. 9 illustrates many of the variables that can be derived from the ellipse 88 to represent some characteristics of the segmented image 31 of the occupant 18 with respect to an airbag deployment system 36. A centroid 94 of the ellipse 88 can be identified by the system 16 for tracking characteristics of the occupant 18. It is known in the art how to identify the centroid 54 of an ellipse 88. Alternative embodiments could use other points on the ellipse 88 to track the characteristics of the occupant 18 that are relevant to airbag deployment 36 or other processing. A wide variety of occupant 18 characteristics can be derived from the ellipse 88.

Motion characteristics include the x-coordinate ("distance") 98 of the centroid 82 and a forward tilt angle ("$\theta$") 100. Shape measurements include the y-coordinate ("height") 96 of the centroid 94, the length of the major axis of the ellipse ("major") 90 and the length of the minor axis of the ellipse ("minor") 92.

Rate of change information and other mathematical derivations, such as velocity (single derivatives) and acceleration (double derivatives), are preferably captured for all shape and motion measurements, so in the preferred embodiment of the invention there are nine shape characteristics (height, height', height", major, major', major", minor, minor', and minor") and six motion characteristics (distance, distance', distance", $\theta$, $\theta'$, and $\theta''$). A sideways tilt angle $\Phi$ is not shown because it is perpendicular to the image plane, and this the sideways title angle $\Phi$ is derived, not measured, as discussed in greater detail below. Motion and shape characteristics are used to calculate the volume, and ultimately the mass, of the occupant 18, so that the kinetic energy of the occupant 18 can be determined. Alternative embodiments may incorporate a greater number or a lesser number of occupant 18 characteristics.

Fig. 10 illustrates the sideways tilt angle "($\Phi$")102. In a preferred embodiment of the invention, there are three shape states, leaning left towards the driver (left) 106, sitting upright (center) 104, and leaning right away from the driver (right) 108, with tilt sideways tilt angles of $-\Phi$, 0, and $\Phi$. In a preferred embodiment, $\Phi$ is set at a value between 15 and 40 degrees, depending on the nature of the vehicle being used. Alternative embodiments may incorporate a different number of shape states, and a different range of sideways tilt angles 102.

## V. MARKOV PROBABILITY CHAINS

The system 16 can incorporate a multiple-model probability weighted implementation of multiple Kalman filters. In a preferred embodiment, a different Kalman filter will be applied to motion characteristics than the Kalman filter applied to shape characteristics. Moreover, it is preferable for each individual shape characteristic to have a separate Kalman filter for each shape state supported by the system 16. Similarly, it is preferable for each individual motion characteristic to have a separate Kalman filter for each motion mode supported by the system 16. There are certain predefined probabilities associated with a transition from one state to another state and from one mode to another mode. These probabilities can be illustrated through the use of Markov chains. The system 16 is flexible, and can support a wide range of different probability values for a wide range of different modes and states. A user of the system 16 is free to set their own probability values into the variables disclosed in the Markov chains, and described in greater detail below. This maximizes the flexibility of the system 16 with respect to different embodiments and different operating environments.

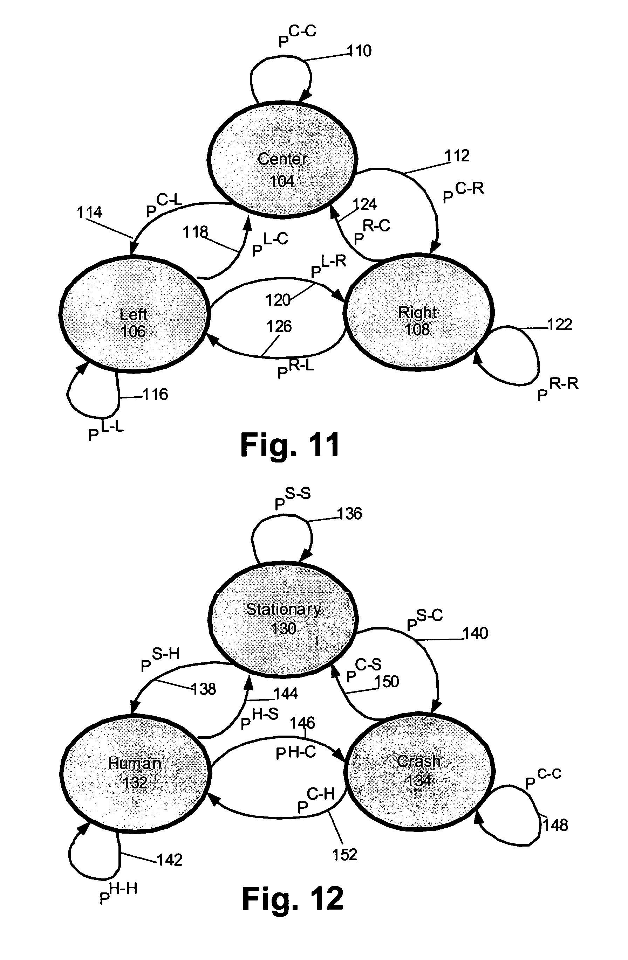

Fig. 11 illustrates the three shape states used in a preferred embodiment of the invention. In a preferred embodiment, an occupant 18 is either leaning towards the driver ("left") 106, sitting upright ("center") 104, or leaning away from the driver ("right") 108. The probability of an occupant 18 being in a particular state and then ending in a particular state can be identified by lines originating at a particular shape state with arrows pointing towards the subsequent shape state. For example, the probability of an occupant in center state remaining in center state $P^{C-C}$ is represented by the arrow at 110. The probability of moving from center to left $P^{C-L}$ is represented by the arrow 114 and the probability of moving from center to right $P^{C-R}$ is 112. The total probabilities resulting from an initial state of center 104 must add up to 1.

$$\text{Equation 4: } P^{C-C} + P^{C-L} + P^{C-R} = 1.0$$

Similarly, all of the probabilities originating from any particular state must also add up to 1.0.

The arrow at 118 represents the probability ($P^{L-C}$) that a left tilting occupant 18 will sit centered by the next interval of time. Similarly, the arrow at 120 represents the probability ($P^{L-R}$) that a left tilting occupant will tilt right by the next interval of time, and the arrow at 116 represents the probability ($P^{L-L}$) that a left tilting occupant will remain tilting to the left. The sum of all possible probabilities originating from an initial tilt state of left must equal 1.

$$\text{Equation 5: } P^{L-C} + P^{L-L} + P^{L-R} = 1.0$$

Lastly, the arrow at 122 represents the probability that a right tilting occupant will remain tilting to the right $P^{R-R}$, the arrow at 124 represents the probability that a right tilting occupant will enter a centered state $P^{R-C}$, and the arrow at 126 represents the probability that an occupant will tilt towards the left $P^{R-L}$. The sum of all possible probabilities originating from an initial tilt state of right equals 1.

$$\text{Equation 6: } P^{R-C} + P^{R-L} + P^{R-R} = 1.0$$

As a practical matter, the typical video camera 22 captures between 40 to 100 frames each second (a high speed video camera 22 captures between 250 to 1000 frames each second). Thus, it is essentially impossible for a left 106 leaning occupant to become a right 108 leaning occupant, or for a right 108 leaning occupant to become a left 106 leaning occupant, without first transitioning to the state of "centered" 104. It is far more likely that a left 106 leaning occupant will first enter a center state 104 before becoming a right 108 leaning occupant, and similarly, it is far more realistic for a right 108 leaning occupant to become a centered 104 occupant before becoming a left 106 leaning occupant. Thus, $P^{L-R}$ at 120 should be set at a low number close to but not equal to zero and $P^{R-L}$ at 126 should be set at a low number close to but not equal to zero.

Fig. 12 illustrates a similar Markov chain to represent the relevant probabilities relating to motion modes. A preferred embodiment of the system 16 uses three motion modes: a stationary mode 130, represents a human occupant 18 in a mode of stillness, such as while asleep; a human mode 132, represents a occupant 18 behaving as a typical passenger in an automobile or other vehicle, one that is moving as a matter of course, but not in an extreme way; and a crash mode 134, represents the occupant 18 of a vehicle that is in a mode of crashing or pre-crash braking.

The probability of an occupant 18 being in a particular mode and then ending in a particular mode over the next increment in time can be identified by lines originating in the current state with arrows pointing to the new state. For example, the probability of an occupant in a stationary mode remaining in stationary mode $P^{S-S}$ is represented by the arrow at 136. The probability of moving from stationary to human $P^{S-H}$ is represented by the arrow at 138. The probability of moving from stationary to crash $P^{S-C}$ is at 140. The total probabilities resulting from an initial state of stationary 130 must add up to 1.

$$\text{Equation 7: } P^{S-S} + P^{S-H} + P^{S-C} = 1.0$$

Similarly, the probability of a transition from human to human is $P^{H-H}$ at 142, human to stationary is $P^{H-S}$ at 144, and human to crash is $P^{H-C}$ at 146. The total probabilities resulting from an initial state of human 132 must add up to 1.

$$Equation\ 8:\ P^{H-H} + P^{H-C} + P^{H-S} = 1.0$$

The probability of going from crash to crash is $P^{C-C}$ at 148, crash to stationary is $P^{C-S}$ at 150, and crash to human is $P^{C-H}$ at 152. The total probabilities resulting from an initial state of crash 122 must add up to 1.

$$Equation\ 9:\ P^{C-C} + P^{C-S} + P^{C-H} = 1.0$$

As a practical matter, it is highly unlikely (but not impossible) for an occupant 18 to ever leave the state of crash at 134 once that state has been entered. Under most scenarios, a crash at 134 ends the trip for the occupant 18. Thus, in a preferred embodiment, $P^{C-H}$, $P^{C-B}$, and $P^{C-S}$ are each set to nearly zero. It is desirable that the system 16 allow some chance of leaving a crash state 134 or else the system 16 may get stuck in a crash state 134 in cases of momentary system 16 "noise" conditions or some other unusual phenomenon. Alternative embodiments can set any particular probability with an appropriate value between 0 and 1, and a different number of modes could be used. The system 16 can incorporate a wide range of probability values which are preferably customized given the particular embodiment and environment of the system 16.

The transition probabilities associated with the various shape states and motion modes are used to generate a Kalman filter equation for each combination of characteristic and state. The results of those filters can then be aggregated in to one result, using the various probabilities to give the appropriate weight to each Kalman filter. All of the probabilities are preferably predefined by the user of the system 16.

The Markov chain probabilities provide a means to weigh the various Kalman filters for each characteristic and for each state and each mode. The tracking and predicting subsystem system 46 incorporates the markov chain probabilities in the form of two subsystems, the shape tracker and predictor 48 and the motion tracker and predictor 50.

## VI. SHAPE TRACKER AND PREDICTOR

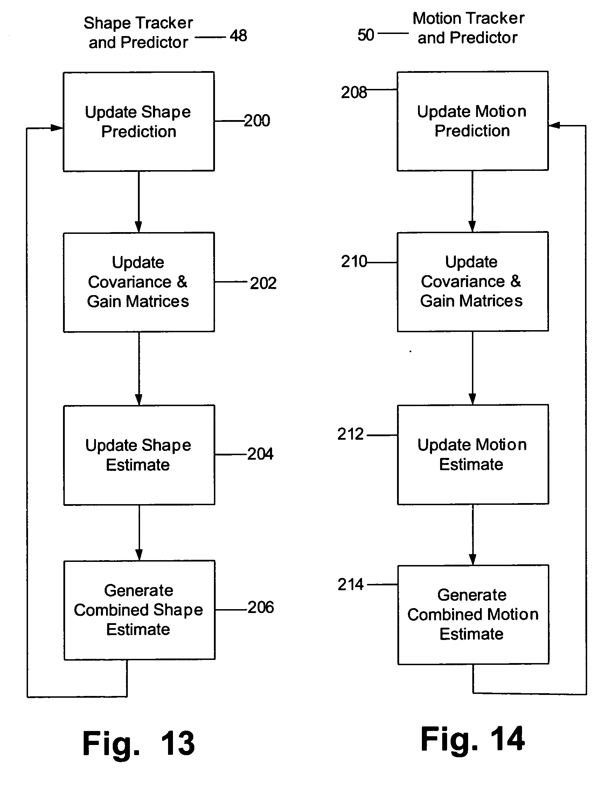

Fig. 13 discloses a detailed flow chart for the shape tracker and predictor 48. In the preferred embodiment of the invention, the shape tracker and predictor 48 tracks and predicts the major axis 90 ("major") of the ellipse 88, the minor axis 92 ("minor") of the ellipse 88, and the y-coordinate ("height") 96 of the centroid 94. Each characteristic has a vector describing position, velocity, and acceleration information for the particular characteristic. The major vector is [major, major', major"], with major' representing the rate of change in the major or velocity and major" representing the double derivative of major (e.g. rate of change in major velocity or acceleration). Accordingly, the minor vector is [minor, minor', minor"], and the height vector is [height, height', height"]. Any other shape vectors will similarly have position, velocity (rate of change), and acceleration (double derivative) components.

The shape tracker and predictor 48 performs an update of shape predictions at 200, an update of covariance and gain matrices at 202, an update of shape estimates at 204, and a generation of combined shape estimates at 206. These processes are described below. The loop from 200 through 206 is perpetual while the system 16 is active. During the initial loop through the process, there is no prediction to update at 200 and there are no covariance or gain matrices to update at 202. Thus, the first loop skips to step 204. In subsequent loops, the first step in the shape tracking and prediction process 48 is an update of the shape prediction at 200. The shape tracker and predictor 48 also infers whether the occupant 18 is leaning left, leaning right, or sitting in a center-oriented posture. This information can be used to determine whether or not the occupant is in the at-risk-zone, as described in greater detail below.

### A. Update Shape Prediction

An update shape prediction process is performed at 200. This process takes the last shape estimate and extrapolates that estimate into a future prediction using a transition matrix.

$$Equation\ 10:\ Updated\ Vector\ Prediction = Transition\ Matrix * Last\ Vector\ Estimate$$

The transition matrix applies Newtonian mechanics to the last vector estimate, projecting forward a prediction of where the occupant 18 will be on the basis of its past position, velocity, and acceleration. The last vector estimate is produced at 204 as described below.

The following equation is then applied for all shape variables and for all shape states, where x is the shape variable, $\Delta t$ represents change over time (velocity), and $\frac{1}{2}\Delta t^2$ represents acceleration.

*Equation 11:*

$$\text{Updated Vector Prediction} = \begin{pmatrix} 1 & \Delta t & \frac{1}{2}\Delta t^2 \\ 0 & 1 & \Delta t \\ 0 & 0 & 1 \end{pmatrix} * \begin{pmatrix} x \\ x' \\ x'' \end{pmatrix}$$

In a preferred embodiment of the invention, there are nine updated vector predictions at 200 because there are three shape states and three non-derived shape variables in the preferred embodiment, and 3 x 3 = 9. The updated shape vector predictions are:

Updated major for center state.
Updated major for right state.
Updated major for left state.
Updated minor for center state.
Updated minor for right state.
Updated minor for left state.
Updated height for center state.
Updated height for right state.
Updated height for left state.

**B. Update Covariance and Gain Matrices**

After the shape predictions are updated for all variables and all states at 200, the shape prediction covariance matrices, shape gain matrices, and shape estimate covariance matrices must be updated at 202. The shape prediction covariance accounts for error in the prediction process. The gain, as described above, represents the weight that the most recent measurement is to receive and accounts for errors in the measurement segmentation process. The shape estimate covariance accounts for error in the estimation process.

The prediction covariance is updated first. The equation to be used to update each shape prediction covariance matrix is as follows:

*Equation 12: Shape Prediction Covariance Matrix =*

*[State Transition Matrix * Old Estimate Covariance Matrix ***

*transpose(State Transition Matrix)] + System Noise*

The state transition matrix is the matrix that embodies Newtonian mechanics used above to update the shape prediction. The old estimate covariance matrix is generated from the previous loop at 204. On the first loop from 200 through 206, step 202 is skipped. Taking the transpose of a matrix is simply the switching of rows with columns and columns with rows, and is known under the art. Thus, the transpose of the state transition matrix is the state transition matrix with the rows as columns and the columns as rows. System noise is a matrix of constants used to incorporate the idea of noise in the system. The constants used in the system noise matrix are set by the user of the invention, but the practice of selecting noise constants is known in the art.

The next matrix to be updated is the gain matrix. As discussed above, the gain represents the confidence of weight that a new measurement should be given. A gain of one indicates the most accurate of measurements, where past estimates may be ignored. A gain of zero indicates the least accurate of measurements, where the most recent measurement is to be ignored and the user of the invention is to rely solely on the past estimate instead. The role played by gain is evidenced in the basic Kalman filter equation of *Equation 13:*

$$X_{(new\ estimate)} = X_{(old\ prediction)} + Gain[-X_{(old\ prediction)} + X_{(measured)}]$$

The gain is not simply one number because one gain exists for each combination of shape variable and shape state. The general equation for updating the gain is

*Equation 14: Gain =*

*Shape Prediction Covariance Matrix \**

*transpose(Measure Matrix) \* inv(Residue Covariance)*

The shape covariance matrix is calculated above. The measure matrix is simply a way of isolating and extracting the position component of a shape vector while ignoring the velocity a nd acceleration components for the purposes of determining the gain. The transpose of the measure matrix is simply [1 0 0]. The reason for isolating the position component of a shape variable is because velocity and acceleration are actually derived components, only position can be measured by a snapshot. Gain is concerned with the weight that should be attributed to the actual measurement.
In the general representation of a Kalman filter, $X_{(new\ estimate)} = X_{(old\ prediction)} + Gain[-X_{(old\ prediction)} + X_{(measured)}]$, the residue represents the difference between the old prediction and the new measurement. There are entire matrices of residue covariances. The inverse of the residue covariance matrix is used to update the gain matrix. It is known in the art how to take the inverse of a matrix, which is a simple linear algebra process. The equation for residue covariance matrix is **Equation 15:**

*Residue Covariance =*

*[Measurement Matrix \* Prediction Covariance \**

*transpose(Measurement Matrix)] + Measurement Noise*

The measurement matrix is a simple matrix used to isolate the position component of a shape vector from the velocity and acceleration components. The prediction covariance is calculated above. The transpose of the measurement matrix is simply a one row matrix of [1 0 0] instead of a one column matrix with the same values. Measurement noise is a constant used to incorporate error associated with the sensor 22 and the segmentation process 40.
The last matrix to be updated is the shape estimate covariance matrix, which represents estimation error. As estimations are based on current measurements and past predictions, the estimate error will generally be less substantial than prediction error. The equation for updating the shape estimation covariance matrix is **Equation 16:**

*Shape Estimate Covariance Matrix =*

*(Identity Matrix - Gain Matrix \* Measurement Matrix) \**

*Shape Predictor Covariance Matrix*

An identity matrix is known in the art, and consists merely of a diagonal line of 1's going from top left to bottom right, with zeros at every other location. The gain matrix is computed and described above. The measure matrix is also described above, and is used to isolate the position component of a shape vector from the velocity and acceleration components. The predictor covariance matrix is also computed and described above.

**C. Update Shape Estimate**

An update shape estimate process is invoked at 204. The first step in this process is to compute the residue.

*Equation 17:*

*Residue = Measurement - (Measurement Matrix \* Prediction Covariance)*

Then the shape states themselves are updated.

*Equation 18:*

*Updated Shape Vector Estimate = Shape Vector Prediction +(Gain * Residue)*

When broken down into individual equations, the results are as follows:

$$X^C_{(major\ at\ t)} = X^C_{(major\ at\ t)} + Gain[-X^C_{(major\ at\ t-1)} + X^C_{(measured\ major)}]$$

$$X^L_{(major\ at\ t)} = X^L_{(major\ at\ t)} + Gain[-X^L_{(major\ at\ t-1)} + X^L_{(measured\ major)}]$$

$$X^R_{(major\ at\ t)} = X^R_{(major\ at\ t)} + Gain[-X^R_{(major\ at\ t-1)} + X^R_{(measured\ major)}]$$

$$X^C_{(minor\ at\ t)} = X^C_{(minor\ at\ t)} + Gain[-X^C_{(minor\ at\ t-1)} + X^C_{(measured\ minor)}]$$

$$X^L_{(minor\ at\ t)} = X^L_{(minor\ at\ t)} + Gain[-X^L_{(minor\ at\ t-1)} + X^L_{(measured\ minor)}]$$

$$X^R_{(minor\ at\ t)} = X^R_{(minor\ at\ t)} + Gain[-X^R_{(minor\ at\ t-1)} + X^R_{(measured\ minor)}$$

$$X^C_{(height\ at\ t)} = X^C_{(height\ at\ t)} + Gain[-X^C_{(height\ at\ t-1)} + X^C_{(measured\ height)}]$$

$$X^L_{(height\ at\ t)} = X^L_{(height\ at\ t)} + Gain[-X^L_{(height\ at\ t-1)} + X^L_{(measured\ height)}]$$

$$X^R_{(height\ at\ t)} = X^R_{(height\ at\ t)} + Gain[-X^R_{(height\ at\ t-1)} + X^R_{(measured\ height)}]$$

In a preferred embodiment, C represents the state of center, L represents the state of leaning left towards the driver, and R represents the state of leaning right away from the driver. The letter t represents an increment in time, with t+1 representing the increment in time immediately after t, and t-1 representing the increment in time immediately before t.

**D. Generate Combined Shape Estimate**

The last step in the repeating loop between steps 200 and steps 208 is a generate combined shape estimate step at 208. The first part of that process is to assign a probability to each shape vector estimate. The residue covariance is recalculated, using the same formula as discussed above.

*Equation 19: Covariance Residue Matrix =*

*[Measurement Matrix * Prediction Covariance Matrix ***

*transpose(Measurement Matrix)] + Measurement Noise*

Next, the actual likelihood for each shape vector is calculated. The system 16 determines which state the occupant is in by comparing the predicted values for the various states with the recent best estimate of what the current values for the shape variables actually are.

***Equation 20:***

$$\text{Likelihood} \begin{pmatrix} C \\ R \\ L \end{pmatrix} = e^{-(\text{residue} - \text{offset})^2 / 2\sigma^2}$$

There is no offset in a preferred embodiment of the system 16 because it can be assumed that offsets cancel each other out, and that the system's 16 processes can be zero-mean Gaussian signals. Sigma represents variance, and is defined in the implementation phase of the invention by a human developer. It is known in the art how to assign a useful value for sigma by looking at data.

The state with the highest likelihood determines the sideways tilt angle $\Phi$. If the occupant 18 is in a centered state, the sideways tilt angle is 0 degrees. If the occupant 18 is tilting left, then the sideways tilt angle is $-\Phi$. If the occupant 18 is tilting towards the right, the sideways tilt angle is $\Phi$. In the preferred embodiment of the invention, $\Phi$ and $-\Phi$ are predefined on the basis of the type and model of vehicle using the system 16.

Next, state probabilities are updated from the likelihood generated above and the pre-defined markovian mode probabilities discussed above.

$$\textit{Equation 21: } P^C = P^{C\text{-}C} + P^{R\text{-}C} + P^{L\text{-}C}$$

$$\textit{Equation 22: } P^R = P^{R\text{-}R} + P^{C\text{-}R} + P^{L\text{-}R}$$

$$\textit{Equation 23: } P^L = P^{L\text{-}L} + P^{C\text{-}L} + P^{R\text{-}L}$$

The equations for the updated mode probabilities are as follows, where $\mu$ represents the likelihood of a particular mode as calculated above.

$$\textit{Equation 24: Probability of state Left} =$$

$$1/[\mu^*(P^{L\text{-}L}+P^{C\text{-}L}+P^{R\text{-}L})+ \mu^{R}{}^*(P^{R\text{-}R}+P^{C\text{-}R}+P^{L\text{-}R})+$$

$$\mu^{C}{}^*(P^{C\text{-}C}+P^{R\text{-}C}+P^{L\text{-}C})]^* \mu^{L}{}^*(P^{L\text{-}L}+P^{C\text{-}L}+P^{R\text{-}L})$$

$$\textit{Equation 25: Probability of state Right} =$$

$$1/[\mu^{L}{}^*(P^{L\text{-}L}+P^{C\text{-}L}+P^{R\text{-}L})+\mu^{R}{}^*(P^{R\text{-}R}+P^{C\text{-}R}+P^{L\text{-}R})+$$

$$\mu^{C}{}^*(P^{C\text{-}C}+P^{R\text{-}C}+P^{L\text{-}C})]^* \mu^{R}{}^*(P^{R\text{-}R}+P^{C\text{-}R}+P^{L\text{-}R})$$

$$\textit{Equation 26: Probability of state Center} =$$

$$1/[\mu^{L}{}^*(P^{L\text{-}L}+P^{C\text{-}L}+P^{R\text{-}L})+\mu^{R}{}^*(P^{R\text{-}R}+P^{C\text{-}R}+P^{L\text{-}R})+$$

$$\mu^{C}{}^*(P^{C\text{-}C}+P^{R\text{-}C}+P^{L\text{-}C})]^* \mu^{C}{}^*(P^{C\text{-}C}+P^{L\text{-}C}+P^{L\text{-}C})$$

The combined shape estimate is ultimately calculated by using each of the above probabilities, in conjunction with the various shape vector estimates. As discussed above, $P^{R\text{-}L}$ and $P^{R\text{-}L}$ are set at 0 in a preferred embodiment.

*Equation 27:*

$$X = \text{Probability of state Left} * X^{Left}$$

$$+ \text{Probability of state Right} * X^{Right}$$

$$+ \text{Probability of state Center} * X^{Center}$$

X is any of the shape variables, including a velocity or acceleration derivation of a measured value.

The loop from 200 through 208 repeats continuously while the vehicle is in operation or while there is an occupant 18 in the seat 20. The process at 200 requires that an estimate be previously generated at 206, and the process at 202 requires the existence of covariance and gain matrices to update, so processing at 200 and 202 is not invoked the first time through the repeating loop from 200 through 208.

## VII. MOTION TRACKER AND PREDICTOR

The motion tracker and predictor 50 in Fig. 14 functions similarly in many respects, to the shape tracker and predictor 48 in Fig. 13. The motion tracker and predictor 50 tracks different characteristics and vectors than the shape tracker. In the preferred embodiment of the invention, the x-coordinate 98 of the centroid 94 and the forward tilt angle $\theta$ 100, and their corresponding velocities and accelerations (collectively "motion variables" or "motion characteristics") are tracked and predicted. The x-coordinate 98 of the centroid 94 is used to determine the distance between the occupant 18 and a location within the automobile such as the instrument panel 34, the airbag deployment system 36, or some other location in the automobile. In the preferred embodiment, the instrument panel 34 is used since that is where the airbag is generally deployed from.

The x-coordinate vector includes a position component (x), a velocity component (x'), and an acceleration component (x"). The $\theta$ vector similarly includes a position component ($\theta$), a velocity component ($\theta$'), and an acceleration component ($\theta$"). Any other motion vectors will similarly have position, velocity, and acceleration components.

The motion tracker and predictor subsystem 50 performs an update motion prediction at 208, an update covariance and gain matrices step at 210, an update motion estimate at 212, and a generate combined motion estimate step at 214. The loop from 208 through 214 mirrors in many respects the loop from 200 through 206. During the first loop through the motion tracker and predictor 50, there is not motion prediction to update at 208 and no covariance or gain matrices to update at 210. Thus, the initial loop begins at 212.

In accordance with the provisions of the patent statutes, the principles and modes of operation of this invention have been explained and illustrated in preferred embodiments. However, it must be understood that this invention may be practiced otherwise than is specifically explained and illustrated without departing from its spirit or scope.

## Claims

1. A method for isolating a current segmented image (31) from a current ambient image (38) captured by a sensor (22), said image segmentation method comprising:

    comparing (53) the current ambient image (38) to a prior ambient image (38);
    identifying (58) a border of the current segmented image (31) by differences between the current ambient image (38) and the prior ambient image (38) ; and
    matching (66) a template to the identified border with a Hausdorf distance heuristic.

2. The method of claim 1, wherein the prior ambient image (38) is captured less than approximately 1/40 of a second before the current ambient image (38) is captured.

3. The method of claim 1, further comprising determining (52) an area of interest in the current ambient image (38).

4. The method of claim 3, further comprising ignoring the portions of the current ambient image (38) that are not within the area of interest.

5. The method of claim 3, wherein determining an area of interest in the ambient image (38) includes predicting the location of the current segmented image (31) from the prior segmented image (31).

6. The method of claim 5, wherein a Kalman filter (46) is used to predict the location of the current segmented image (31) from the prior segmented image (31).

7.   The method of claim 3, wherein the area of interest is a rectangle in the current ambient image (38).

8.   The method of claim 3, wherein a bottom area in the prior segmented image (31) is ignored in the current ambient image (38).

9.   The method of claim 1, wherein a plurality of pixels (78) in the current ambient image (38) are compared to a corresponding plurality of pixels (78) in the prior ambient image (38).

10.  The method of claim 9, wherein each pixel (78) in said plurality of pixels (78) in the current ambient image (38) is compared to a corresponding pixel (78) in said plurality of pixels (78) in the prior ambient image (38).

11.  The method of claim 1, further comprising applying a low-pass filter to the identified border.

12.  The method of claim 1, further comprising performing an image gradient heuristic (56) to locate an area of change between the current ambient image (38) and the prior ambient image (38).

13.  The method of claim 1, further comprising thresholding the identified border.

14.  The method of claim 1, further comprising selecting the prior segmented image (31) as the current segmented image (31).

15.  The method of claim 1, further comprising invoking a clean gradient image heuristic (64).

16.  The method of claim 1, wherein matching (66) the template includes rotating the template through a range of angles.

17.  The method of claim 16, wherein the range of angles is from approximately -6 degrees and +6 degrees.

18.  The method of claim 16, wherein the angles in said range of angles are predetermined.

19.  The method of claim 1, wherein the template is a binary image.

20.  The method of claim 1, further comprising modifying (68) the template.

21.  The method of claim 20, wherein modifying (68) the template includes setting a cubic spline fit.

22.  The method of claim 21, wherein modifying (68) the template includes setting a new set of control points.

23.  The method of claim 1, further comprising fitting (70) an ellipse (88) to the template.

24.  The method of claim 23, wherein fitting (70) an ellipse (88) to the template includes invoking direct least squares fitting heuristic.

25.  The method of claim 24, wherein fitting (70) the ellipse (88) includes copying a lower portion of a previous ellipse (88).

26.  A method for isolating a current segmented image (31) from a current ambient image (38), comprising:

  identifying (52) a region of interest in the current ambient image (38) from a previous ambient image (38);
  applying a low-pass filter to an image difference (53) determined by comparing the region of interest in the current ambient image (38) to a corresponding area in the previous ambient image (38);
  performing (56) an image gradient calculation for finding a region in the current ambient image (38) with a rapidly changing image amplitude;
  thresholding the image difference with a predetermined cumulative distribution function (80);
  cleaning the results of the image gradient calculation (56);
  matching (66) a template image to the cleaned results with a Hausdorf distance heuristic; and
  fitting (70) an ellipse (88) to the template image.

27. A segmentation system (16) for isolating a segmented image (31) from an ambient image (38), comprising:

an ambient image (38), including a segmented image (31) and an area of interest;
a gradient image module, including a gradient image (56), wherein said gradient image module generates said gradient image (56) in said area of interest (52); and
a t emplate m odule, including a t emplate, a t emplate m atch, a nd a H ausdorf heuristic, wherein said template module generates said template match (66) from said template, said gradient image (56), and said Hausdorf heuristic.

28. The system (16) of claim 27, wherein said template module assumes said segmented image (31) remains in a seated position.

29. The system (16) of claim 27, wherein said template module rotates said template.

30. The system (16) of 29, further comprising a range of angles including a plurality of predefined angles, wherein said template module rotates said template in each of said plurality of predefined angles.

31. The system (16) of claim 27, further comprising:

a product image, a binary image, and a non-binary image;

wherein said template is a binary image and said gradiant image (56) is a non-binary image; and
wherein said product image is generated by multiplying said template with said gradiant image (56).

**Fig. 1**

**Fig. 2**

Fig. 3

38

Ambient Image

Identify a region of interest
52

Create Difference Image
53

Save Current Image as Prior
Image for Next Ambient Image
54

Create Gradient Image
56

Adaptive Threshold
Difference Image
58

Too
Little Motion
?

Yes → Use Previous
Ellipse
60

No

Too
Much Motion
?

Yes → Rely on Predictor
62

No

Clean Up Gradient Image
64

Find Angle for the
Best Matching
Template
66

No

Adequate
Image?

Yes

Update
Template
68

Ellipse Fitting
70

Output Ellipse
72

# Fig. 4

120,000

\# P i x e l s

78  0

0                                                    255

Luminosity 76

Increasing Brightness

**Fig. 5**

74

**Histogram**

C u m 82
u l a t i v e

1

0.90

0.80

0.70

P r o b a b i l i t y

0

**Cumulative Distribution Curve**

80

0                                    120,000

\# of Pixels 78

**Fig. 6**

Image Threshold 84

Take top N% of points

38 — Ambient Image

31

**Fig. 7**

**Fig. 8a**

**Fig. 8b**

**Fig. 8c**

**Fig. 8d**

**Fig. 8e**

**Fig. 8f**

Y-Axis

90

92

96

Y

θ

100

94

X

98

X-Axis

## Fig. 9

104

106

108

Φ

Φ

102

## Fig. 10

Fig. 11

Fig. 12

Shape Tracker
and Predictor —— 48

Motion Tracker
50 —— and Predictor

Update Shape
Prediction ——200

208—— Update Motion
Prediction

Update
Covariance &
Gain Matrices ——202

210—— Update
Covariance &
Gain Matrices

Update Shape
Estimate ——204

212—— Update Motion
Estimate

Generate
Combined Shape ——206
Estimate

214—— Generate
Combined Motion
Estimate

## Fig. 13

## Fig. 14